Europäisches Patentamt

(19) European Patent Office

Office européen des brevets

(11) Publication number: **0 242 193**
B1

(12) **EUROPEAN PATENT SPECIFICATION**

(45) Date of publication of the patent specification:
28.03.90

(21) Application number: **87303300.5**

(22) Date of filing: **15.04.87**

(51) Int. Cl.⁴: **B65G 67/60**, B65G 65/06,
B65G 43/00

(54) **Material handling systems.**

(30) Priority: **18.04.86 GB 8609501**

(43) Date of publication of application:
**21.10.87 Bulletin 87/43**

(45) Publication of the grant of the patent:
**28.03.90 Bulletin 90/13**

(84) Designated Contracting States:
**DE FR IT NL SE**

(56) References cited:
**GB-A- 1 196 724**

**PATENT ABSTRACTS OF JAPAN, vol. 9,
no. 98 (M-375)[1821], 27th April 1985; & JP - A
- 59 223 630 (ISHIKAWAJIMA HARIMA
JUKOGYO) 15-12-1984
PATENT ABSTRACTS OF JAPAN, vol. 9,
no. 121 (M-382)[1844], 25th May 1985; & JP - A
- 60 6530 (EBARA SEISAKUSHO) 14-01-1985**

(73) Proprietor: **GEC ALSTHOM MECHANICAL HANDLING
LIMITED, Cambridge Road, Whetstone, Leicester
LE8 3LH(GB)**

(72) Inventor: **Addicott, Donald William Russell, High Danson
The Ridge Cold Ash, Newbury Berkshire(GB)**

(74) Representative: **Kirby, Harold Victor Albert, Central
Patent Department Wembley Office The General
Electric Company, p.l.c. Hirst Research Centre East
Lane, Wembley Middlesex HA9 7PP(GB)**

ACTORUM AG

## Description

This invention relates to material handling systems of the kind incorporating a bucket elevator movable along a path which can be pivoted to some extent from the vertical. Such material handling systems are commonly used, for example, for unloading loose material, which may be either non- or free-flowing, such as coal, iron ore, phosphates, grain and so on from the holds of barges and ships, or from storage containers, stockyards and the like. In use of such systems the bucket elevator is usually carried by an elevator leg which depends from a supporting boom, the leg being pivotable inwards and outwards with respect to the boom to a limited extent, in order to enable the elevator to reach different parts of a hold, container, stockyard or the like, such movement being generally referred to as kicking.

One difficulty experienced with such bucket elevators is that the quantity of material which the buckets can contain depends on the angle and direction in which the elevator has been kicked, and if the elevator is driven at a constant speed the feed rate of the material being handled will vary in dependence upon the position of the elevator.

According therefore to the invention, a material handling system of the kind referred to incorporates a transducer for monitoring the angular position of the elevator, and arranged to generate an output signal for automatically adjusting the speed at which the elevator is driven so as to maintain the rate of feed of the material approximately constant.

By this means it is possible to ensure an optimum rate of discharge of material over the full operating range of kicking movement of the elevator.

One bucket elevator system in accordance with the invention employed in a continuous ship unloader will now be described by way of example with reference to Figures 1 to 4 of the accompanying schematic drawings, in which

Figure 1 represents a side view of the ship unloader in diagrammatic form,

Figures 2 and 3 illustrate the manner of operation of the elevator, and

Figure 4 illustrates an alternative form of ship unloader embodying the invention.

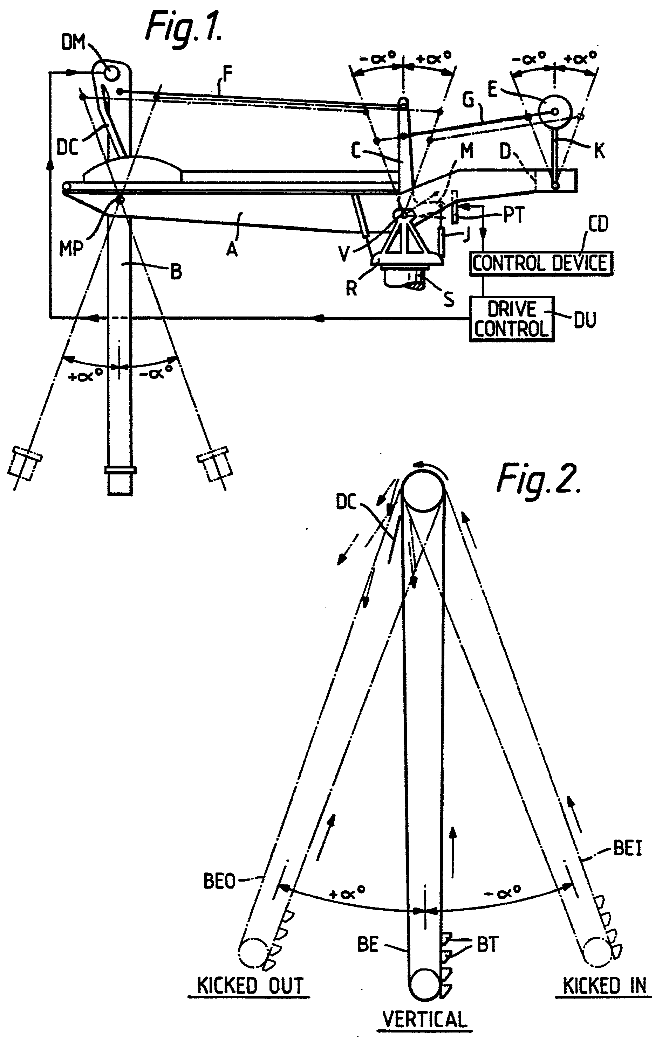

Referring first to Figure 1, the ship unloader comprises a main luffing boom A mounted, intermediate its end on a support frame R by means of a horizontally extending pivot V, the frame being carried by a main support structure S relative to which it is free to slew about a vertical axis.

A marine leg B, accommodating a bucket elevator BE (Figure 2), depends downwards from one end of the luffing boom A, being mounted on a transversely-extending pivot pin MP which allows the leg to be "kicked" inwards and outwards to a limited extent from the vertical.

The opposite end of the luffing boom A carries a fixed ballast D and a rocking ballast E, the latter being mounted at the upper end of a support frame K which is pivoted at its lower end to the luffing boom, and is coupled at its upper end to the upper end of the marine leg B, which projects above the luffing boom A, via links G, F and a bell crank lever C.

A hydraulic ram J acts between the frame R and the rearwardly projecting arm M of the bell crank lever C for pivoting the latter about its axis, this resulting in the marine leg being kicked in or out, and at the same time producing a simultaneous movement of the rocking ballast E such as to compensate for changes in the position of the centre of gravity of the marine leg B relative to the luffing boom A, as described in co-pending Patent Application No. 8609497.

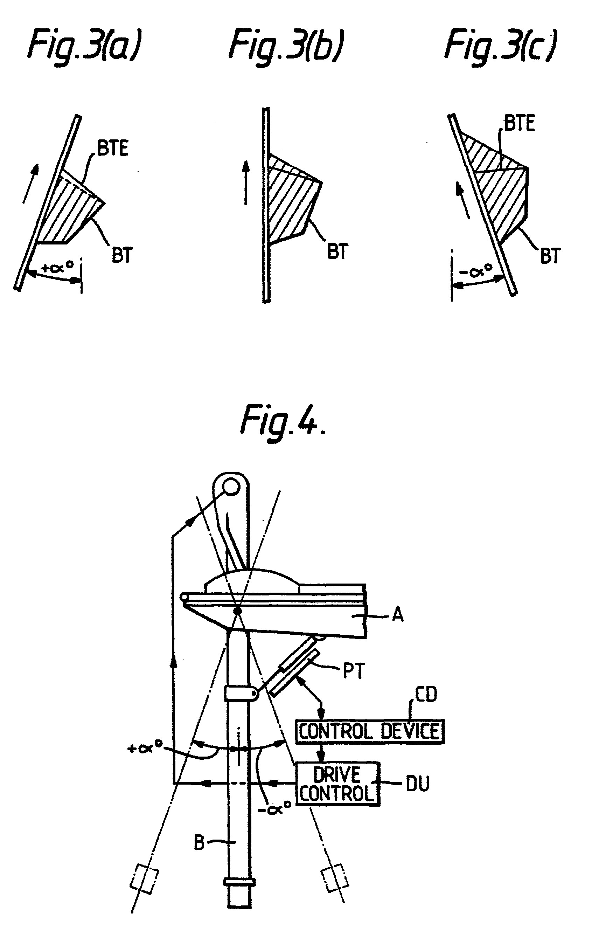

The bucket elevator BE is driven in use by a variable speed electric or hydraulic drive motor DM located at the top of the marine leg B. It will be noted that the amount of material carried by the elevator buckets BT (only some of which are shown) is at its lowest when the marine leg is kicked-out through its maximum angle $+\alpha°$ as at BEO, and is greatest when it is kicked in through its greatest angle $-\alpha°$ as at BEI. This is shown more clearly with reference to Figure 3, in which 3(a) shows a bucket BT with the marine leg B kicked-out at an angle $+\alpha°$, the surcharge angle of material (shown shaded) within the bucket being below the edges BTE of the bucket sides. Figure 3(b) shows a bucket with the marine leg in the vertical position, the surcharge relative to the bucket being increased, and Figure 3(c) shows a bucket with the marine leg kicked-in at an angle $-\alpha°$, giving a maximum bucket fill, with the surcharge well above the bucket edges BTE.

A position transducer PT of any convenient kind monitors the movement of the bell crank lever C and hence the angle of kick of the marine leg B, and a control device CD responsive to the position transducer PT generates an output signal which is fed to a drive control unit DU which controls the speed of the electric or hydraulic motor DM driving the bucket elevator the speed being increased when the leg B is kicked-out, and decreased when it is kicked-in, by amounts depending upon the angle of kick, such as to maintain the rate of feed of the material approximately constant.

Furthermore it will be noted with reference to Figure 2 that with the marine leg B kicked-in and the bucket elevator running at its lowest speed, the trajectory of materials from head of elevator will be low, allowing material to flow down the discharge chute DC at a steep angle, whereas with the marine leg kicked-out and the elevator running at its highest speed the trajectory of material will be high, allowing material to flow down discharge chute at a flatter angle, the angle of the chute varying with the angular setting of the marine leg in an appropriate manner to allow for the changes in trajectory.

In the ship unloader illustrated the transfer ashore is on the opposite side of the elevator head to the discharge, but it will be appreciated that the invention and the principles contained therein apply also to installations in which the transfer is on the same side as the discharge.

The position transducer, instead of monitoring the position of the marine leg B indirectly, as illustrated in Figure 1, may be located directly between the leg and the boom as in the modified arrangement shown in Figure 4, the control in this case being arranged to include a correction for variations in boom angle.

## Claims

1. A material handling system incorporating a bucket elevator (BE) movable along a path which can be pivoted to some extent from the vertical and characterized by a transducer (PT) for monitoring the angular position ($\alpha$) of the elevator, and arranged to generate an output signal for automatically adjusting the speed at which the elevator is driven so as to maintain the rate of feed of the material approximately constant.

2. A material handling system according to Claim 1, wherein the bucket elevator forms part of an elevator leg (B) which is supported for pivotal movement in a vertical plane by a nominally horizontal boom (A), the boom is itself mounted on, and is arranged to luff about a horizontal axis (V) to a limited extent relative to, a main support structure (R and S), and wherein the support structure carries a bell crank lever (C), also pivotable about said horizontal boom axis, and actuating means linked to the bell crank lever for producing a pivoting movement thereof, the bell crank lever being linked to the elevator leg for transmitting the motion of the actuator to the leg, which linkage is such that the angular setting of the leg remains substantially constant over a range of different luffing positions of the boom, and the transducer being arranged to monitor the position of the bell crank lever and hence the angular setting of the elevator leg.

3. A material handling system according to Claim 1, wherein the bucket elevator forms part of an elevator leg (B) which is supported for pivotal movement in a vertical plane by a nominally horizontal boom (A), the boom is itself mounted on, and is arranged to luff about a horizontal axis relative to, a main support structure (R and S), the transducer being arranged to monitor the position of the elevator leg relative to the boom, and a further transducer means being provided for monitoring the position of the boom relative to the support, and the system including control means for adjusting the speed of the elevator in dependence upon the outputs of both transducer means.

4. A material handling system according to Claim 1, 2 or 3 wherein the bucket elevator is driven by an electric motor (DM), and the system incorporates a control circuit for controlling the speed of the motor in dependence upon the output of the transducer.

5. A material handling system according to Claim 1, 2 or 3 wherein the bucket elevator is driven by an hydraulic motor, and the system incorporates means for controlling the speed of the motor in dependence upon the output of the transducer.

6. A material handling system according to any preceding Claim wherein the elevator incorporates a discharge chute at the top of the elevator for feeding material discharged from the buckets of the elevator on to a conveyor belt carried by the boom, the angle of the chute relative to the vertical varying with the angular setting of the elevator leg.

7. A material handling system according to any preceding Claim in which the elevator head chute is shaped and positioned to ensure efficient discharge within the range of kick angles and belt speed and the resultant discharge trajectory of the material from the elevator buckets.

## Patentansprüche

1. Materialfördersystem, enthaltend einen entlang einer Bahn bewegbaren Becherelevator (BE), der bis zu einem gewissen Grad aus der Vertikalen verschwenkbar ist, und gekennzeichnet durch einen Wandler (PT) zur Überwachung der Winkelstellung ($\alpha$) des Elevators und dazu ausgelegt, ein Ausgangssignal zur automatischen Einstellung der Geschwindigkeit, mit der der Elevator angetrieben wird, in der Weise, daß die Förderrate des Materials angenähert konstantgehalten wird, zu erzeugen.

2. Materialfördersystem nach Anspruch 1, in welchem der Becherelevator einen Teil eines Elevatorbeins (B) bildet, das zur Schwenkbewegung in einer vertikalen Ebene von einem nominell horizontalen Ausleger (A) getragen wird, wobei der Ausleger selbst auf einer Hauptträgerstruktur (R und S) angebracht ist und dazu ausgelegt ist, sich gegenüber dieser Struktur bis zu einem begrenzten Ausmaß um eine horizontale Achse (V) einzuziehen, und in welchen die Trägerstruktur einen Kniehebel (C) trägt, der ebenfalls um diese horizontale Auslegerachse verschwenkbar ist, und eine Betätigungseinrichtung trägt, die mit dem Kniehebel derart gekoppelt ist, daß von diesem eine Schwenkbewegung hervorgerufen wird, wobei der Kniehebel mit dem Elevatorbein gekoppelt ist, um die Bewegung des Betätigers auf das Bein zu übertragen, welche Kopplung derart ist, daß die Winkeleinstellung des Beins über einen Bereich von unterschiedlichen Einziehstellungen des Auslegers im wesentlichen konstant bleibt, und in welchem der Wandler so ausgelegt ist, daß er die Stellung des Kniehebels und damit die Winkeleinstellung des Elevatorbeins überwacht.

3. Materialfördersystem nach Anspruch 1, in welchem der Becherelevator einen Teil eines Elevatorbeins (B) bildet, das zur Schwenkbewegung in einer vertikalen Ebene von einem nominell horizontalen Ausleger (A) getragen wird, wobei der Ausleger selbst auf einer Hauptträgerstruktur (R und S) angebracht ist und dazu ausgelegt ist, sich gegenüber dieser um eine horizontale Achse einzuziehen, in welchem der Wandler so ausgelegt ist, daß er die Stellung des Elevatorbeins in bezug auf den Ausleger erfaßt, und in welchem eine weitere Wandlereinrichtung vorgesehen ist, die die Stellung des Auslegers in bezug auf den Träger überwacht, und wobei das System eine Steuereinrichtung einschließt, die die Geschwindigkeit des Elevators in Abhängigkeit von den Ausgangssignalen beider Wandlereinrichtungen einstellt.

4. Materialfördersystem nach Anspruch 1, 2 oder 3, in welchem der Becherelevator durch einen Elektromotor (DM) angetrieben wird und das System eine Steuerschaltung enthält, die die Geschwindigkeit des Motors in Abhängigkeit vom Ausgangssignal des Wandlers steuert.

5. Materialfördersystem nach Anspruch 1, 2 oder 3, in welchem der Becherelevator von einem hydraulischen Motor angetrieben wird und das System Einrichtungen zum Steuern der Geschwindigkeit des Motors in Abhängigkeit vom Ausgangssignal des Wandlers enthält.

6. Materialfördersystem nach einem der vorhergehenden Ansprüche, in welchem der Elevator eine Abgaberutsche am oberen Ende des Elevators enthält, um aus den Bechern des Elevators entladenes Material auf ein vom Ausleger getragenes Förderband zu fördern, wobei der Winkel der Rutsche in bezug auf die Vertikale mit der Winkeleinstellung des Elevatorbeins variiert.

7. Materialfördersystem nach einem der vorhergehenden Ansprüche, in welchem die Elevatorkopfrutsche so geformt und positioniert ist, daß eine effiziente Entladung innerhalb des Bereichs der Anstoßwinkel und Bandgeschwindigkeit und der resultierenden Entladetrajektorie des Materials aus den Elevatorbechern gewährleistet ist.

**Revendications**

1. Système de manutention de matériaux comprenant un élévateur (BE) à godets susceptible de se déplacer sur un trajet que l'on peut faire pivoter par rapport à la verticale dans une certaine mesure, système caractérisé par un transmetteur (PT) destiné à surveiller la position angulaire (α) l'élévateur et agencé en vue de délivrer un signal de sortie pour régler automatiquement la vitesse à laquelle est entraîné l'élévateur, de manière à maintenir approximativement constant le débit de transfert du matériau.

2. Système de manutention de matériaux selon la revendication 1, dans lequel l'élévateur à godets fait partie d'un bras (B) de l'élévateur qui est supporté en vue d'un déplacement par pivotement dans un plan vertical par une flèche (A) normalement horizontale, la flèche étant elle-même montée sur un axe horizontal (V) et agencée de manière à pivoter sur cet axe, dans une mesure limitée, par rapport à une structure de support principal (R et S), et dans lequel la structure de support porte un levier (C) coudé, également susceptible de pivoter sur ledit axe horizontal de la flèche et des moyens d'actionnement reliés au levier coudé et destinés à provoquer un déplacement par pivotement de celui-ci, le levier coudé étant relié au bras de dispositif élévateur en vue de transmettre le mouvement de l'organe d'actionnement au bras, laquelle liaison est telle que le réglage angulaire du bras reste sensiblement constant sur une plage de différentes positions de pivotement de la flèche et le transmetteur étant agencé pour surveiller la position du levier coudé et de ce fait le réglage angulaire du bras de dispositif élévateur.

3. Système de manutention de matériaux selon la revendication 1, dans lequel le dispositif élévateur à godets fait partie d'un bras (B) élévateur qui est supporté en vue de se déplacer par pivotement dans un plan vertical par une flèche (A) normalement horizontale, système dans lequel la flèche elle-même est montée sur une structure principale (R et S), en étant agencée pour pivoter sur un axe horizontal par rapport à cette structure principale, le transmetteur étant agencé en vue de surveiller la position du bras d'élévateur relative à la flèche et un autre moyen transmetteur étant installé en vue de surveiller la position de la flèche par rapport au support, et le système comportant un moyen de commande destiné à régler la vitesse de l'élévateur en fonction des signaux de sortie des deux moyens transmetteurs.

4. Système de manutention de matériaux selon les revendications 1, 2 ou 3, dans lequel l'élévateur à godets est entraîné par un moteur (DM) électrique, et dans lequel est incorporé un circuit de commande destiné à commander la vitesse du moteur en fonction des signaux de sortie du transmetteur.

5. Système de manutention de matériaux selon les revendications 1, 2 ou 3, dans lequel l'élévateur à godets est entraîné par un moteur hydraulique, des moyens étant incorporés dans le système en vue de commander la vitesse du moteur en fonction des signaux de sortie du transmetteur.

6. Système de manutention de matériaux selon l'une quelconque des revendications précédentes, dans lequel l'élévateur comporte à son sommet une goulotte de décharge, destinée à transporter le matériau déchargé des godets de l'élévateur jusqu'à une bande transporteuse portée par la flèche, l'angle de la goulotte, par rapport à la verticale, variant avec la position angulaire du bras de l'élévateur.

7. Système de manutention de matériaux selon l'une quelconque des revendications précédentes, dans lequel la goulotte de la tête de l'élévateur a une forme telle, et est positionnée de telle manière, qu'elle assure une décharge efficace sur toute la plage des angles de déplacement et de vitesses de bande, ainsi que des trajectoires de décharge du matériau qui en résultent, à partir des godets du dispositif élévateur.

Fig.1.

Fig.2.

KICKED OUT

VERTICAL

KICKED IN

*Fig.3(a)*

*Fig.3(b)*

*Fig.3(c)*

*Fig.4.*